# EUROPÄISCHE PATENTSCHRIFT

(11) **EP 1 050 698 B1**
(45) Veröffentlichungstag und Bekanntmachung des Hinweises auf die Patenterteilung: **21.01.2004**
(21) Anmeldenummer: 00109394.7
(22) Anmeldetag: 03.05.2000
(51) Int. Cl.: F16H 59/12

(54) **Drucktastenwähleinrichtung für automatisches Getriebe**
Push button range selector for automatic transmission
Dispositif de sélection de la gamme à bouton de manoeuvre par pression pour transmission automatique

(30) Priorität: 03.05.1999 DE 19920001
(43) Veröffentlichungstag der Anmeldung: 08.11.2000
(73) Patentinhaber: Voith Turbo GmbH & Co. KG, 89522 Heidenheim (DE)
(72) Erfinder: Bürk, Richard, 88454 Hochdorf (DE); Dietzel, Bernd, 89428 Syrgenstein (DE)
(74) Vertreter: Koch, Annegret Christa

(56) Entgegenhaltungen:
- EP-A- 0 615 078
- WO-A-98/13844
- DE-B- 1 194 269
- US-A- 4 137 824
- PATENT ABSTRACTS OF JAPAN vol. 014, no. 155 (M-0954), 26. März 1990 (1990-03-26) -& JP 02 017265 A (ISEKI & CO LTD), 22. Januar 1990 (1990-01-22)

## Beschreibung

Die Erfindung betrifft eine Vorwahleinrichtung zur Vorgabe eines Fahrerwunsches nach einem bestimmten Fahrzustand zur Ansteuerung automatischer Getriebe für den Einsatz in Fahrzeugen, insbesondere Nutzfahrzeugen, im einzelnen mit den Merkmalen aus dem Oberbegriff des Anspruchs 1; ferner ein Verfahren zur sicheren Erfassung der Betätigung von Betätigungselementen einer Vorwahleinrichtung zur Vorgabe eines Fahrerwunsches nach einem bestimmten Fahrzustand zur Ansteuerung automatischer Getriebe für den Einsatz in Fahrzeugen.

Vorwahleinrichtungen für die Vorgabe eines Fahrerwunsches nach einem bestimmten Fahrzustand, welcher durch entsprechende Ansteuerung einer Getriebebaueinheit, insbesondere der Schaltelemente und/oder der hydrodynamischen Leistungsübertragungs- oder Wandlungseinrichtungen einer Getriebebaueinheit, eingestellt werden kann, sind in verschiedenen Ausführungen bekannt. Für den Einsatz in Nutzfahrzeugen, insbesondere Bussen finden vor allem Tastschaltereinrichtungen Verwendung: Diese weisen eine bestimmte Anzahl von Betätigungselementen auf, welche auch als Bedienelemente bezeichnet werden, mittels welchen der entsprechend gewünschte Fahrzustand durch den Fahrer manuell vorgewählt werden kann. Dabei werden jedoch wenigstens die folgenden drei Fahrzustände unterschieden:
a) "Leerlauf'', welcher einer, mit dem Betätigungselement einstellbaren Neutralstellung entspricht
b) "Rückwärtsfahrt"
c) "Vorwärtsfahrt", wobei unter Ausnutzung einer bestimmten Anzahl von theoretisch möglichen Gangstufen des automatischen Getriebes ein bestimmter vordefinierbarer Übersetzungsbereich aus einem theoretisch möglichen Gesamtübersetzungsbereich überstrichen werden kann.

Der Fahrzustand "Vorwärtsfahrt" kann dabei in verschiedene Unterfahrzustände untergliedert werden, wobei für diese ebenfalls entsprechende Betätigungselemente zur Auswahl vorgesehen sind. Diese Unterfahrzustände zeichnen sich dadurch aus, daß im Fahrzustand "Vorwärtsfahrt" tatsächlich nur ein bestimmter Bereich des theoretisch möglichen zur Verfügung stehenden Übersetzungsbereiches der Getriebeeinheit durch einen Teil der theoretisch möglichen Gangstufen überstrichen wird. Weist beispielsweise die automatische Getriebebaueinheit sechs Gänge auf, besteht dann die Möglichkeit vom Fahrer vorzugeben, ob im Fahrzustand "Vorwärtsfahrt" alle sechs Gänge genutzt werden sollen, oder ob lediglich eine bestimmte Anzahl der unteren Gänge durchlaufen werden soll. Dies ist auch für Fahrzustände "Rückwärtsfahrt" möglich. Um ein ungewolltes In-Bewegung-Setzen des Fahrzeuges zu vermeiden, ist es dabei erforderlich, die an der Vorwahleinrichtung vorgegebene Auswahl des Fahrzustandes sicher zu erfassen. Dies wird in der Regel dadurch realisiert, daß zumindest jeweils zwei Signale durch die Betätigung eines der Betätigungselemente, bei Tastschalteinrichtungen in Form von Tasten, generiert werden. Aus dem Stand der Technik sind dazu Lösungen bekannt, welche den einzelnen Betätigungselementen jeweils zwei Erfassungseinrichtungen für die beiden Funktionsstellungen der Betätigungselemente "Betätigung" und "Nicht-Betätigung" zugeordnet werden. Aus den mittels dieser Einrichtungen erfaßten Größen und generierten Signalen und den entsprechenden Verknüpfungen der Signalergebnisse in einer Steuereinrichtung, vorzugsweise der Getriebesteuerung, können die entsprechenden Funktionszustände eindeutig abgeleitet werden. Der steuerungstechnische Aufwand ist jedoch durch das Vorsehen zweier erforderlicher Sensoren für jedes Betätigungselement und der Auswertung der mittels diesen generierten Signalen erheblich höher und das Gesamtsystem ist aufgrund der höheren Anzahl an erforderlichen Komponenten teurer und anfälliger gegenüber Störungen, da bereits beim Ausfall eines Sensors eine sichere Feststellung der Tastenbetätigung ausgeschlossen werden muß.

Zur Absicherung gegenüber Fehlbedienungen ist aus der Druckschrift DE-AS 1 194 269 eine elektrische Drucktastensteuerung für Fahrzeugwechslgetriebe bekannt, bei welcher die Betätigung einer Drucktaste elektrisch erfaßt wird und bei Betätigung zusätzlich das Schaftende einer Drucktaste mit quer zur Verstellrichtungder Drucktaste verschieblichen, in Reihe angeordneten Sperrkörpern zusammenarbeiten, deren Gesamtlänge in Bezug auf die Länge Ihres Führungskanales so bemessen ist, daß nur eine Drucktaste in die kontaktgebende Stellung gelangen kann und ferner mit jeder Drucktaste ein Kurvenelement verbunden ist, welches mit je einem Ausscnitt einer quer zur Betätigungsrichtung der Drucktasten verschieblichen federbelasteten Verriegelungsstange derart zusammenwirkt, daß die eingedrückte Drucktaste mittels einer Anschlagfläche des Kurvenelmentes von der Verriegelungsstange in der wirksamen Stellung gehalten ist und schräg ansteigende Flächen der Kurvenelemente die Verriegelungsstange beim Eindrücken einer anderen Drucktaste in Richtung der Freigabestellung für die Drucktasten verschieben. Mit dieser Lösung können Doppelbetätigungen bei tatsächlicher Betätigung einer Drucktaste sicher vermieden werden, allerdings ist diese nicht geeignet zweifelsfrei auf die Betätigung einer Drucktaste zu schließen. Insbesondere bei Schließen eines elektrischen Kontaktes durch äußere Umstände unabhängig von einer tatsächlichen Betätigung der Drucktaste tritt die mechanische Verriegelung nicht in Kraft, so daß aus dieser auch nicht auf die Betätigung einer Drucktaste geschlossen werden kann.

Eine elektronische Lösung zur Erfassung einer Betätigung eines Bedienelementes ist aus der Druckschrift EP 0 615 078 A1 bekannt. Bei diesem wird aus einem Signal und der Überwachung unterschiedlicher Spannungsbereiche auf die Betätigung geschlossen. Auch hier stellt sich das Problem einer zweifelsfreien Erfassung bei Auftreten eines Kurzschlusses.

Der Erfindung liegt daher die Aufgabe zugrunde, eine Vorwahleinrichtung zur Vorgabe eines Fahrerwunsches nach einem bestimmten Fahrzustand zur Ansteuerung eines automatischen Getriebes für den Einsatz in Fahrzeugen derart weiterzuentwickeln, daß die genannten Nachteile vermieden werden. Im einzelnen soll der konstruktive und steuerungstechnische Aufwand minimiert werden, wobei jedoch auf eine hohe Zuverlässigkeit der Funktion der Erkennung der Tastschalterstellung abzustellen ist. Des weiteren soll die vorgeschlagene Lösung auch ohne erhebliche Modifikationen für verschiedene Varianten von Vorwahleinrichtungen, welche sich insbesondere in den Auswahlmöglichkeiten bezüglich der möglichen einzustellen Unterfahrzustände im Fahrzustand "Vorwärtsfahrt" unterscheiden, geeignet sein. Als verschiedene Varianten werden dabei die mögliche Ausgestaltung der Vorwahleinrichtungen mit einer entsprechenden Anzahl von Betätigungselementen, welche der Anzahl der entsprechenden vorwählbaren Fahrzustände entspricht, verstanden.

Die erfindungsgemäße Lösung wird durch die Merkmale der Ansprüche 1 und 12 charakterisiert. Vorteilhafte Ausgestaltungen sind in den Unteransprüchen wiedergegeben.

Die Vorwahleinrichtung zur Vorgabe eines Fahrerwunsches für einen der nachfolgend genannten Fahrzustände zur Ansteuerung einer automatischen Getriebeeinheit für den Einsatz in Fahrzeugen umfaßt eine entsprechende Anzahl von Betätigungselementen - auch als Bedienelemente bezeichnet - welche der Anzahl der möglichen einzustellenden Fahrzustände entspricht. Als Fahrzustände werden dabei wenigstens die nachfolgend genannten angesehen:
- "Leerlauf" oder Neutralstellung
- "Rückwärtsfahrt"
- "Vorwärtsfahrt", wobei die Auswahl des Fahrzustandes unter Ausnutzung des theoretisch möglichen überstreichbaren Übersetzungsbereiches und damit die Durchschaltung aller theoretisch möglichen Gangstufen oder Beschränkung des überstreichbaren Übersetzungsbereiches innerhalb des theoretisch möglichen Übersetzungsbereiches durch Begrenzung der möglichen schaltbaren Gangstufen erfolgt.

Die Betätigungselemente können dabei jeweils wenigstens zwei Funktionszustände einnehmen, einen ersten Funktionszustand "Nicht-Betätigung" und einen zweiten Funktionszustand "Betätigung". Die Vorwahleinrichtung umfaßt dazu ferner eine Einrichtung zur Erfassung der Funktionszustände der einzelnen Betätigungselemente für Vorwärts- und Rückwärtsfahrt. Die Einrichtung zur Erfassung der Funktionszustände umfaßt dabei erfindungsgemäß jeweils ein, dem einzelnen Betätigungselement zugeordnetes Erfassungsmittel zur Erfassung eines Funktionszustandes, vorzugsweise des Funktionszustandes "Betätigung", und ein, allen Betätigungselementen gemeinsam zugeordnetes Erfassungsmittel zur Erfassung eines Zustandes "Betätigung eines Betätigungselementes", welcher dadurch charakterisiert ist, daß überhaupt die Betätigung eines der Betätigungselemente erfolgt ist, unabhängig davon, welches der Betätigungselemente eine Betätigung erfährt. Erste und zweite Erfassungsmittel umfassen Mittel zur Generierung von Signalen. Mit dem ersten Erfassungsmittel wird ein Signal für die tatsächliche Betätigung einer bestimmten Drucktaste generiert und mit den zweiten Erfassungsmitteln wird ein Signal für die erfolgte Betätigung eines beliebigen Betätigungs- bzw. Bedienelementes generiert, welches zur Auswertung bezüglich des Vorliegens einer tatsächlichen Betätigung heranziehbar ist. Beide Erfassungsmittel sind zu diesem Zweck mit einer Auswerteinrichtung koppelbar. Die Auswerteinrichtung ist in der Regel in einer Steuereinrichtung integriert bzw. wird von dieser gebildet. Bei dieser handelt es sich vorzugsweise um die Steuereinrichtung der Getriebebaueinheit. Andere Ausführungen sind jedoch denkbar.

Dieses zweite Erfassungsmittel weist einen Sensor auf, welcher allen Betätigungselementen gemeinsam zugeordnet ist. Die Kopplung zwischen den Betätigungselementen und diesem Sensor kann dabei auf unterschiedliche Art und Weise erfolgen. Eine erste Ausgestaltung umfaßt eine mechanisch-elektrische Lösung. Die Erfassung des Zustandes "Betätigung eines Betätigungselementes" erfolgt dabei beispielsweise mittels eines Reed-Kontaktes. Jedes der einzelnen Betätigungselemente ist dazu mit einer, allen Betätigungselementen gemeinsam zugeordneten Schiebeeinrichtung für einen zur Herstellung eines elektrischen Kontaktes verwendeten Magneten, gekoppelt. Dabei werden die Kontakte durch Verschiebung des Magneten bei Betätigung eines Betätigungselementes geschlossen. Andere Möglichkeiten sind jedoch ebenfalls denkbar, beispielsweise Hallsensoren zur Detektierung eines Magnetfeldes, eine optoelektronische Erfassung oder eine direkte Betätigung der elektrischen Kontakte. In einer fortgebildeten Ausführungsform der Erfindung kann optional die Erfassung der Betätigung des Betätigungsmittels für den Leerlauf vorgesehen sein; dies ist jedoch nicht zwingend.

Aus den mit den Sensoren erfaßten Größen bzw. Zuständen können entsprechende Signale generiert werden, vorzugsweise elektrische Signale, die der Ansteuerung einer Getriebebaueinheit dienen.

Die erfindungsgemäße Lösung ermöglicht es, mit sehr geringem Aufwand, d.h. lediglich mit Zuordnung jeweils eines Erfassungsmittel direkt zu einem Betätigungselement und eines weiteren zweiten, gemeinsam von allen Betätigungselementen nutzbaren Erfassungsmittels in Form von Sensoren, zwei Signale zur Charakterisierung der Funktionsstellungen der Betätigungselemente zu erzeugen, welche eine Einstellung von fehlerhaften bzw. nicht gewünschten Fahrzuständen, beispielsweise ein nicht gewünschtes In-Bewegung-Setzen des Fahrzeuges, welches sich beispielsweise bei Vorsehen lediglich eines einzigen Sensors zur Erfassung der Funktionsstellung der Betätigungselemente beim Zustandswechsel einstellen kann, sicher zu verhindern. Derartige Zustandswechsel können sich dabei bei Vorsehen lediglich eines einzigen Sensors auch nur aufgrund von äußeren Einflüssen, beispielsweise Feuchtigkeit, elektromagnetischer Störeinflüsse oder eines Bauteildefektes ergeben, indem der Sensor durch die genannten Einflüsse angesprochen wird, bzw. sonst ein fehlerhaftes Signal generiert wird, welches sich in seiner Auswirkung als Sensorbetätigung darstellt.. Die erfindungsgemäße Erfassung und damit mögliche nachfolgende Bearbeitung zweier Signale erlaubt es jedoch, eine Ansteuerung der Getriebebaueinheit fehlerfrei zu ermöglichen. Die mit den beiden Erfassungsmitteln, d.h. dem, einem Betätigungselement jeweils zugeordneten Sensor und dem gemeinsamen Sensor generierten, vorzugsweise elektronischen Größen werden als Signale einer Steuereinrichtung der Getriebebaueinheit oder einer anderen Steuereinrichtung, beispielsweise einer übergeordneten Fahrsteuerung, wenigstens indirekt, vorzugsweise jedoch direkt zugeführt.

Die konstruktive Ausgestaltung der Vorwahleinrichtung kann entsprechend der Auswahl der verwendeten Betätigungselemente unterschiedlich erfolgen. Dabei kommen als Betätigungselemente nachfolgend genannte Bauelemente in Betracht:
a) Schalter, beispielsweise Kipp- oder Schiebeschalter
b) Taster
c) Hebel

Die Zuordnung der einzelnen Erfassungsmittel zu den entsprechenden Betätigungselementen und die Zuordnung des Erfassungsmittels für eine generelle Betätigung eines Betätigungselementes kann dabei für alle möglichen Ausführungen auf die gleiche Art und Weise erfolgen. Die mögliche Gestaltung der konstruktiven Verknüpfung ist dabei jedoch von der Art der verwendeten Betätigungselemente abhängig und liegt im Tätigkeitsbereich des zuständigen Fachmannes.

Als Erfassungsmittel für die Erfassung der Funktionsstellungen der einzelnen Betätigungselemente und der Betätigung eines Betätigungselementes generell können unterschiedliche Systeme verwendet werden. Vorzugsweise wird jedoch zur einfachen Integration und Kopplung mit einer Getriebesteuereinrichtung ein Sensor verwendet, welcher ein elektrisches Signal für die Getriebesteuereinrichtung zur Verfügung stellt. Die Erfassungsmittel sind dann derart gestaltet, daß eine Betätigung eines beliebigen oder speziellen Betätigungselementes durch eine mechanische Größe, beispielsweise einen Weg, Winkel oder eine Kraft charakterisierbar ist, welche en Ansprechen des Sensors bewirkt. Diese Sensoren oder Kontakte können dabei beispielsweise als sogenannte Reed-Kontakte, Hall-Sensoren oder optoelektronische Sensoren ausgeführt sein. Diese werden dann auf einer Leiterplatte angeordnet, und treten mit den Betätigungselementen in Wirkverbindung. Die erfindungsgemäße Lösung bietet dabei den weiteren Vorteil, daß für eine Leiterplatte unabhängig von der Anzahl der Betätigungselemente nur eine Bestücksvariante hergestellt werden muß, da der Sensor nur dann betätigt wird, wenn auch die Taste bzw. das entsprechende Betätigungselement vorhanden ist. Im anderen Fall bleibt der Sensor unbetätigt. Dies ermöglicht die Schaffung standardisierter Grundkonfigurationen für Tastschalteinrichtungen, unabhängig von der Anzahl der möglichen wählbaren Fahrzustände.

Die erfindungsgemäße Lösung wird nachfolgend anhand von Figuren erläutert. Darin ist im einzelnen folgendes dargestellt:
- Figur 1A: verdeutlicht in schematisch vereinfachter Darstellung eine erfindungsgemäß gestaltete Tastschalteinrichtung mit Betätigungselementen zur Auswahl von beispielsweise sechs Fahrzuständen in elektromechanischer Lösung;
- Figur 1B: verdeutlicht eine Ausführung einer Tastschalteinrichtung entsprechend dem Stand der Technik;
- Fig. 2A-2B: verdeutlichen in schematisch vereinfachter Darstellung eine erfindungsgemäß gestaltete Tastschalteinrichtung mit Betätigungselementen zur Auswahl von beispielsweise sechs Fahrzuständen in elektrischer Lösung.

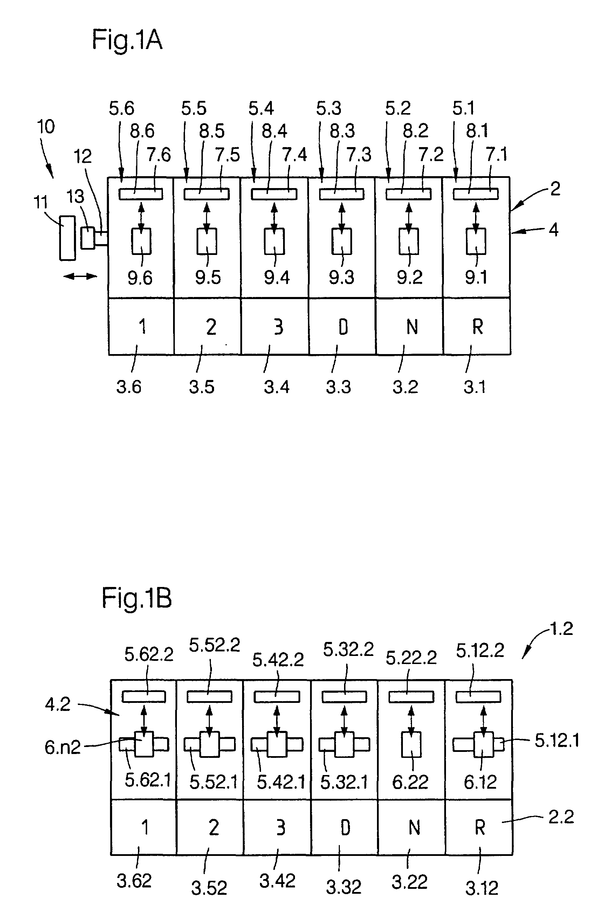

Die Figur 1B verdeutlicht anhand einer vereinfachten Darstellung den Grundaufbau und die Funktionsweise einer konventionellen, d.h. aus dem Stand der Technik bekannten Vorwahleinrichtung 1.2 zur Vorgabe eines Fahrerwunsches nach einem der nachfolgend genannten Fahrzustände zur Ansteuerung eines automatischen Getriebes für den Einsatz in Fahrzeugen. Vorwählbare Fahrzustände sind dabei der "Leerlauf", die "Rückwärtsfahrt" und die 'Vorwärtsfahrt" mit der Möglichkeit der Ausnutzung eines bestimmten Bereiches des theoretisch mit der Getriebeeinheit möglichen überstreichbaren Gesamtübersetzungsbereiches. Die Vorwahl dieser Fahrzustände erfolgt dabei über die Vorwahleinrichtung 1.2, welche in der Figur 1B als Tastenschalteinrichtung 2.2 ausgeführt ist. Für die Wahl der einzelnen Fahrzustände sind entsprechende Betätigungselemente 3.12 bis 3.n2, hier 3.12 bis 3.62 vorgesehen. Das Betätigungselement 3.12 dient der Vorwahl des Fahrzustandes "Rückwärtsfahrt", das Betätigungselement 3.22 der Vorwahl des Fahrzustandes "Leerlauf" und die Betätigungselemente 3.32 bis 3.62 der Vorwahl des Fahrzustandes "Vorwärtsfahrt", wobei das Betätigungselement 3.32 zur Vorwahl des Fahrzustandes "Vorwärtsfahrt" mit Überstreichen des gesamten theoretisch möglichen Übersetzungsbereiches und damit dem Durchschalten aller möglichen Gänge dient. Die Betätigungselemente 3.42 bis 3.62 dienen der Vorwahl des Fahrzustandes "Vorwärtsfahrt", wobei jedoch entsprechend des gewählten Betätigungselementes der Bereich des theoretisch möglichen überstreichbaren Übersetzungsbereiches beschränkt wird. Dies bedeutet, daß entsprechend der Auswahl durch Betätigung der Betätigungselemente 3.42 bis 3.62 im Fahrzustand "Vorwärtsfahrt" jeweils entweder nur eine, zwei oder drei Gangstufen durchlaufen werden. Die einzelnen Betätigungselemente 3.12 bis 3.62, welche in Form von Tasten ausgeführt sind, sind in jeweils wenigstens zwei Funktionsstellungen, eine erste Funktionsstellung "Betätigung" und eine zweite Funktionsstellung "Nicht-Betätigung" bringbar. Zur sicheren Erfassung der Funktionsstellungen, welche dann jeweils als Signal zur Ansteuerung des automatischen Getriebes verwendet werden, ist eine Einrichtung 4.2 zur Erfassung der Funktionsstellung der einzelnen Betätigungselemente 3.12 bis 3.62 vorgesehen. Die Einrichtung 4.2 umfaßt in der dargestellten Ausführungsform dabei jedem der Betätigungselemente 3.12, 3.32 bis 3.62 zugeordnete Erfassungsmittel 5.12.1, 5.32.1 bis 5.62.1 und 5.12.2, 5.32.2 bis 5.62.2 zur Erfassung der jeweiligen Funktionsstellung "Betätigung" oder "Nicht-Betätigung" für Vorwärts- und Rückwärtsfahrt. Im dargestellten Fall sind die Sensoren 5.12.2 bis 5.62.2 zur Erfassung der Funktionsweise "Betätigung" und die Sensoren 5.12.1, 5.32.1 bis 5.62.1 zur Erfassung der Funktionsstellung "Nicht-Betätigung" vorgesehen. Lediglich das Betätigungselement 3.22 für die Funktionsweise der Getriebebaueinheit "Leerlauf" weist optional nur ein Erfassungsmittel 5.22.2 zur Erfassung der Funktionsweise "Betätigung" an der Vorwahleinrichtung 1.2 auf. Dabei sind die Erfassungsmittel 5.12.1, 5.32.1 bis 5.62.1 für die Erfassung der Funktionsweise "Nicht-Betätigung" gemeinsam mit dem Erfassungsmittel 5.22.2 für den "Leerlauf" für das entsprechend zu erzeugende Neutralsignal zuständig, während die Erfassungsmittel 5.12.2 bis 5.62.2 das Betätigungselementensignal liefern. Eine Sollwertvorgabe für die Funktionsweise "Leerlauf" liegt immer dann vor, wenn die Erfassungsmittel 5.12.1, 5.32.1 bis 5.62.1 die Funktionsweise "Nicht-Betätigung" erfassen oder das Erfassungsmittel 5.22.2, d.h. der Sensor für die Neutraltaste betätigt wird.

Ein Verlassen des Neutralzustandes, d.h. der Funktionsweise "Leerlauf" erfolgt immer dann, wenn mindestens eines der Erfassungsmittel 5.12.1, 5.32.1 bis 5.62.1 unbetätigt ist und zusätzlich eines der Erfassungsmittel 5.12.2 bis 5.62.2 die Funktionsweise "Betätigung" anzeigt. Im dargestellten Fall weisen die Erfassungsmittel sogenannte Reed-Kontakte auf. Dies bedeutet, daß die einzelnen Erfassungsmittel 5.12.1 bis 5.62.1 bzw. 5.12.2 bis 5.62.2 elektrische Kontakte aufweisen, über welche je nach Art der Betätigung der Betätigungselemente 3.12 bis 3.62 ein Magnet 6.12 bis 6.n2 geschoben wird, wobei immer das Zusammenwirken des Magneten 6.12 bis 6.n2 mit den entsprechenden Kontakten der Erfassungsmittel 5.12.1 bis 5.62.1 bzw. 5.12.2 bis 5.62.2 den entsprechenden Funktionszustand anzeigt, da diese beim Entlangleiten der Magneten 6.12 bis 6.n2 die Kontakte schließen. Eine direkte mechanische Betätigung durch die Betätigungselemente ist ebenfalls denkbar.

Mit dieser konventionellen Lösung läßt sich zwar das Ziel einer sicheren Erfassung der Funktionsstellung der einzelnen Betätigungselemente 3.12 bis 3.n2 erreichen, dafür sind jedoch immer mindestens zwei Sensoren je Betätigungselement erforderlich. Zur Vermeidung dieses Nachteiles ist es gemäß der erfindungsgemäßen Lösung, welche in der Figur 1A wiedergegeben ist, vorgesehen, eine Vorwahleinrichtung 1 zur Vorgabe eines Fahrerwunsches zur Ansteuerung eines automatischen Getriebes für den Einsatz in Fahrzeugen derart auszugestalten, daß den einzelnen Betätigungselementen 3.1 bis 3.n, hier ebenfalls 3.1 bis 3.6, eine geringere Anzahl an Erfassungsmitteln 5 zugeordnet ist. Der Grundaufbau der Vorwahleinrichtung 1 in Form einer Tastschalteinrichtung 2 entspricht dabei im wesentlichen dem in der Figur 1 B beschriebenen. Das bedeutet, daß auch hier über einzelnen Betätigungselemente 3.1 bis 3.n eine Vorwahl der Funktionsweise der Getriebebaueinheit herbeiführbar ist, wobei wenigstens die Fahrzustände "Leerlauf", "Rückwärtsfahrt" und "Vorwärtsfahrt" im einfachsten Fall wählbar sind. Bezüglich der vorwählbaren Funktionsweisen kann für den Fahrzustand "Vorwärtsfahrt" zusätzlich eine Auswahlmöglichkeit bezüglich des nutzbaren Bereiches des theoretisch maximal möglichen Gesamtübersetzungsbereiches erfolgen. Im dargestellen Fall werden dafür wiederum drei zusätzliche Möglichkeiten durch die Betätigungselemente 3.4 bis 3.6 angegeben, so daß neben der vollen Ausnutzung des theoretisch möglichen Übersetzungsbereiches durch Auswahl bzw. Betätigung des Betätigungselementes 3.3 eine Begrenzung des nutzbaren Übersetzungsbereiches über die Vorauswahl der zu durchlaufenden Gangstufen entsprechend der Betätigungselemente 3.4 bis 3.6 erfolgen kann. Auch die Vorwahleinrichtung 1 gemäß der Figur 1A in Form einer Tastschalteinrichtung 2 weist eine Einrichtung 4 zur Erfassung der Funktionsstellungen der einzelnen Betätigungselemente 3.1 bis 3.6 auf. Diese umfaßt dabei jeweils einen, einem Betätigungselement 3.1 bis 3.n zugeordneten Sensor 7.1 bis 7.n. Diese Sensoren fungieren als Erfassungsmittel 5.1 bis 5.6 zur Erfassung der Funktionsstellung "Betätigung" der Betätigungselemente 3.1 bis 3.6. Auch hier sind die Sensoren 7.1 bis 7.n als sogenannte Reed-Kontakte ausgeführt, welche elektrische Kontakte 8.1 bis 8.n, hier 8.1 bis 8.6 und Magneteinrichtungen 9.1 bis 9.n, hier 9.1 bis 9.6 aufweisen, welche bei Betätigung der Betätigungselemente 3.1 bis 3.n durch Verschiebung der Magneteinrichtungen 9.1 bis 9.n in Wirkverbindung mit den Kontakten 8.1 bis 8.6 treten. Die Magneteinrichtungen 9.1 bis 9.n werden dazu vorzugsweise gleitend geführt und stehen jeweils mit dem entsprechenden Betätigungselement 3.1 bis 3.n in Verbindung, wobei die Anordnung am Betätigungselement 3.1 bis 3.n derart erfolgt, daß bei Betätigung eine Verschiebung der Magneteinrichtung 9.1 bis 9.n zu den Kontakten 8.1 bis 8.n erzielt wird, was zum Schließen der Kontakte führt und ein Signal für die Funktionsstellung "Betätigung" generiert. Die einzelnen Funktionszustände können dabei durch das bloße Betätigen der Betätigungselemente 3.1 bis 3.n ausgewählt werden. Das entsprechende Signal für die Auswahl der Funktionsweise "Leerlauf", welcher mit der Neutraltaste, d.h. dem Betätigungselement 3.2 gewählt werden kann, wird zusätzlich durch das Vorliegen bzw. Nichtvorliegen entsprechender statischer Signale für die Betätigung der Betätigungselemente 3.1, 3.3 bis 3.6 gebildet. Auch hier wird für jede Funktionsstellung "Betätigung" oder "Nicht-Betätigung" ein entsprechendes Signal zur Weiterverarbeitung an einer Steuereinrichtung, beispielsweise der Getriebesteuerung generiert. Um zusätzlich zu vermeiden, daß ein einfacher Zustandswechsel bei dieser Lösung dazu führt, daß sich das Fahrzeug ungewollt in Bewegung setzt, da ja lediglich ein Sensor pro Betätigungselement 3.1 bis 3.n vorhanden ist, wird erfindungsgemäß zur Bildung eines Sollwertsignales für die Funktionsweise des Fahrzeuges zusätzlich ein weiteres zweites Signal gebildet, welches für die tatsächliche Betätigung eines der Betätigungselemente 3.1 bis 3.n steht. Dazu weist die Einrichtung zur Erfassung des Funktionszustandes der einzelnen Betätigungselemente 3 ein, allen Betätigungselementen 3.1 bis 3.n gemeinsam zugeordnetes Erfassungsmittel 10 auf, welches einen Sensor 11 umfaßt, der lediglich ein Signal "Betätigung eines der Betätigungselemente" 3.1 bis 3.n erzeugt, wobei es unabhängig ist, welches der Betätigungselemente betätigt ist. Zu diesem Zweck sind die einzelnen Betätigungselemente 3.1 bis 3.n jeweils separat mit dieser Einrichtung 10 gekoppelt. Eine einfache Möglichkeit besteht dabei darin, bei Betätigung der einzelnen Betätigungselemente 3.1 bis 3.n jeweils ein mechanisches Signal zu erzeugen, welches über den Sensor 11 in ein elektrisches Signal umgewandelt wird. Dies kann beispielsweise derart erfolgen, daß die einzelnen Betätigungselemente 3.1 bis 3.n mit einer Schiebeeinrichtung 12 gekoppelt sind, welche einen Magneten 13 trägt, welcher mit dem Sensor 11 in Form eines Kontaktes in Wirkverbindung tritt.

Diese Möglichkeit erlaubt es, die Vorwahleinrichtung 1 in Form einer Tastenschalteinrichtung 2 derart zu gestalten, daß den einzelnen Betätigungselementen 3.1 bis 3.n lediglich nur noch ein Sensor zugeordnet werden muß, während allen Betätigungselementen 3.1 bis 3.n gemeinsam ein weiterer zweiter Sensor zur Erzeugung bzw. Generierung eines Signales für die Tastenbetätigung zugeordnet ist, wodurch die gesamte Vorwahleinrichtung sehr preiswert angeboten werden kann. Des weiteren erlaubt die Überwachung der Betätigung der Betätigungselemente 3.1 bis 3.n durch Erzeugung zweier Signale eine sichere Signalerfassung für die Auswahl der einzustellenden Fahrzustände am Fahrzeug.

Die in der Figur 1A dargestellte Ausführung stellt eine mögliche vorteilhafte Ausgestaltung einer erfindungsgemäßen Vorwahleinrichtung dar. Der Schutzumfang der vorliegenden Anmeldung ist jedoch nicht auf diese Ausführung beschränkt. Insbesondere für die Generierung des Signales "Betätigung einer Betätigungstaste" können technisch andere Möglichkeiten verwendet werden. Als Erfassungsmittel können beispielsweise auch Hall-Sensoren oder optoelektronische Sensoren eingesetzt werden. Auch eine direkte Betätigung elektrischer Kontakte ist denkbar.

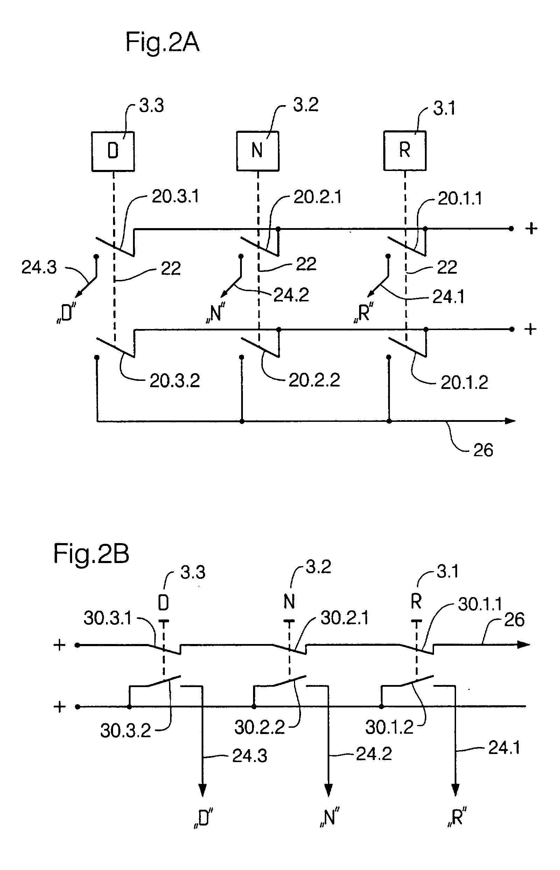

Eine technisch alternative Ausgestaltung der Erfindung zeigen die Figuren 2A und 2B. Bei den in den Figuren 2A und 2B gezeigten Ausführungsformen handelt es sich um solche, bei denen auf ein gemeinsames mechanisches Bauteil, beispielsweise ein Schieber 12, wie beschrieben, zur Generierung des Signales "Betätigung eines Betätigungsgliedes" verzichtet wird und dieses Signal alleine auf elektrischem Weg erzeugt wird.

In Figur 2A ist eine Ausführungsform dargestellt, bei der zur Erzeugung der Signale bei Betätigung der Betätigungselemente 3.1 - 3.n Schließer 20.1.1-20.n.1 sowie 20.1.2 - 20.n.2 verwendet werden. Die einem Betätigungselement 3.1-3.n zugeordneten Schließer 20.1.1 - 20.n.1 sowie 20.1.2 - 20.n.2 sind miteinander mechanisch, beispielsweise über eine Stange 22, gekoppelt. Bei Betätigen eines Betätigungselementes schließen die beiden miteinander gekoppelten Schließer. Es wird ein Impulssignal auf die einzelnen den Betätigungselementen zugeordneten Leitungen 24.1-24.n ausgegeben, die jeweils den Zustand des Betätigungsgliedes, beispielsweise D, N, R charakterisieren. Durch Schließen des zweiten mit dem ersten Schließer 20.1.1 - 20.n.1 gekoppelten Schließers 20.1.2 - 20.n.2 wird ein Impuls auf die allen Betätigungseinrichtungen gemeinsame Leitung 26 gegeben. Das Signal auf der Leitung 26 repräsentiert den Zustand "Betätigen eines Betätigungselementes", ohne daß spezifiziert wird, welcher der Schließer bzw. Betätigungselemente betätigt wurde.

Leitung 26, die eine Parallelschaltung der Schließer 20.3.2, 20.2.2 sowie 20.1.2 darstellt, ersetzt gegenüber der in Figur 1A beschriebenen elektromechanischen Lösung die Schiebereinrichtung 12 mit Magneten, die mit dem Sensor 11 in Form eines Kontaktes in Wirkverbindung tritt.

In Figur 2B ist eine alternative elektrische Ausführungsform zu der in Figur 2A dargestellten gezeigt, wobei gleiche Bauteile wie in Figur 2A und 2B mit denselben Bezugsziffem belegt sind. Anstelle der Schließer 20.1.1 - 20.n.1 und 20.1.2 - 20.n.2 werden hier Öffner 30.1.1 - 30.n.1 sowie 30.1.2 - 30.n.2 verwendet. Ein Signal wird dann geliefert, wenn der Kontakt geöffnet wird, d.h. wenn ein Aus-Impuls gegeben wird. Signale beim Öffnen sind sowohl den einzelnen Betätigungselementen wie auch der gemeinsamen Leitung "Betätigung eines Betätigungselementes" zugeordnet.

### Bezugszeichenliste

- 1, 1.2: Vorwahleinrichtung
- 2, 2.2: Tastschalteinrichtung
- 3.1 bis 3.n, 3.12 bis 3.n2: Betätigungselemente
- 4, 4.2: Einrichtung zur Erfassung der Funktionsstellung der Betätigungselemente
- 5.1 bis 5.6; 5.12.1 bis 5.62.1, 5.12.2 bis 5.62.2: Erfassungsmittel
- 6.12 bis 6.n2: Magneteinrichtungen
- 7.1 bis 7.n: Sensoren
- 8.1 bis 8.n: elektrische Kontakte
- 9.1 bis 9.n: Magneteinrichtungen
- 10: Erfassungsmittel
- 11: Sensor
- 12: Schiebeeinrichtung
- 13: Magnet
- 20.1.1-20. n .1, 20.1.2-20.n.2: Schließer für Betätigungselemente
- 22: mechanische Kopplung zwischen Betätigungselementen
- 24.1-24.3: Signalleitung für einzelne Betätigungselemente
- 26: Signalleitung für Signal "Betätigung eines Betätigungselementes"
- 30.1.1-30. n.1, 30.1.2-30.n.2: Öffner für Betätigungselemente

## Patentansprüche

1. Vorwahleinrichtung (1) zur Vorgabe eines Fahrerwunsches für einen der nachfolgend genannten Fahrzustände zur Ansteuerung automatischer Getriebe für den Einsatz in Fahrzeugen
- "Leerlauf"
- "Vorwärtsfahrt"
- "Rückwärtsfahrt"
mit einem, jedem wählbaren Fahrzustand zugeordneten Betätigungselement (3.1 - 3.n), welches wenigstens zwei Funktionsstellungen, eine erste Funktionsstellung "Nicht-Betätigung" und eine zweite Funktionsstellung "Betätigung" einnehmen kann;
mit einer Einrichtung (4) zur Erfassung der Funktionsstellungen der Betätigungselemente (3.1-3.n);
**gekennzeichnet durch** die folgenden Merkmale:
die Einrichtung (4) zur Erfassung der Funktionsstellung für Vorwärts- und/oder Rückwärtsfahrt umfaßt jeweils, den einzelnen Betätigungselementen (3.1-3.n) unmittelbar zugeordnete erste Erfassungsmittel (5.1-5.n) zur wenigstens mittelbaren Erfassung der Funktionsstellung "Betätigung" des Betätigungselementes (3.1-3.n);
die Einrichtung (4) umfaßt des weiteren ein, allen Betätigungselementen (3.1-3.n) gemeinsam zugeordnetes zweites Erfassungsmittel (10) zur Erfassung des Vorliegens der Betätigung eines der Betätigungselemente, umfassend Mittel zur Generierung eines Signales zur Auswertung des Betätigungszustandes;
erste und zweite Erfassungsmittel sind mit einer Auswerteinrichtung koppelbar.

2. Vorwahleinrichtung (1) nach Anspruch 1, **dadurch gekennzeichnet, daß** auch die Einrichtung zur Erfassung der Funktionsstellung "Leerlauf" einem diesem Betätigungselement unmittelbar zugeordnetes erstes Erfassungsmittel umfaßt.

3. Vorwahleinrichtung (1) nach Anspruch 1, **dadurch gekennzeichnet, daß** die Einrichtung (4) frei von einer Kopplung zwischen den ersten (5.1-5.n) und zweiten Erfassungsmitteln (10) ist.

4. Vorwahleinrichtung (1) nach einem der Ansprüche 1 bis 3, **dadurch gekennzeichnet, daß** diese zusätzliche Betätigungselemente (3.4-3.6) aufweist, welche für den Fahrzustand "Vorwärtsfahrt" zusätzlich eine Auswahl eines bestimmten vordefinierbaren Übersetzungsbereiches aus einem theoretisch möglichen Gesamtübersetzungsbereich ermöglichen.

5. Vorwahleinrichtung (1) nach einem der Ansprüche 1 bis 4, **dadurch gekennzeichnet, daß** diese als Tastschalteinrichtung (2) ausgeführt ist, wobei die Betätigungselemente (3.1-3.n) in Form von Tasten ausgeführt sind.

6. Vorwahleinrichtung (1) nach einem der Ansprüche 1 bis 4, **dadurch gekennzeichnet, daß** diese als Tastschalteinrichtung (2) ausgeführt ist, wobei die einzelnen Betätigungselemente (3.1-3.n) als Schalter in Form von Kippschaltern ausgeführt sind.

7. Vorwahleinrichtung (1) nach einem der Ansprüche 1 bis 4, **dadurch gekennzeichnet, daß** diese als Schalteinrichtung ausgeführt ist, wobei die Betätigungselemente als Schiebeschalter ausgeführt sind.

8. Vorwahleinrichtung (1) nach einem der Ansprüche 1 bis 4, **dadurch gekennzeichnet, daß** die Betätigungselemente als Hebel ausgeführt sind.

9. Vorwahleinrichtung (1) nach einem der Ansprüche 1 bis 4, **dadurch gekennzeichnet, daß** die Betätigungselemente als Taster mit elektronischen Erfassungs- und/oder Speichereinrichtungen ausgeführt sind.

10. Vorwahleinrichtung (1) nach einem der Ansprüche 1 bis 9, **dadurch gekennzeichnet, daß** die ersten und/oder zweiten Erfassungsmittel (5.1-5.n, 10) Sensoren oder Kontakte (7.1-7.n, 11) umfassen, welche aus einer mechanischen Größe eine elektrische Größe generieren.

11. Vorwahleinrichtung (1) nach Anspruch 10, **dadurch gekennzeichnet, daß** die ersten und/oder zweiten Erfassungsmittel (5.1-5.n, 10) Sensoren oder Kontakte (7.1-7.n, 11) in Form von Reed-Kontakten umfassen.

12. Vorwahleinrichtung (1) nach Anspruch 10, **dadurch gekennzeichnet, daß** die ersten und/oder zweiten Erfassungsmittel (5.1-5.n, 10) Sensoren (7.1-7.n, 11) in Form von Hall-Sensoren aufweisen.

13. Vorwaleinrichtung nach Anspruch 10, **dadurch gekennzeichnet, daß** die ersten und/oder zweiten Erfassungsmittel Mittel zur optoelektronischen Erfassung umfassen.

14. Vorwahleinrichtung (1) nach einem der Ansprüche 1 bis 13, **dadurch gekennzeichnet, daß** die zweiten Erfassungsmittel (10) eine mechanische oder elektrische Kopplung zwischen jedem Betätigungselement (3.1-3.n) und dem Sensor oder Kontakt (11) umfassen.

15. Verfahren zur sicheren Erfassung der Betätigung von Betätigungselementen (3.1-3.n) einer Vorwahleinrichtung (1) zur Vorgabe eines Fahrerwunsches für einen der nachfolgend genannten Fahrzustände zur Ansteuerung automatischer Getriebe für den Einsatz in Fahrzeugen
- "Leerlauf"
- "Vorwärtsfahrt"
- "Rückwärtsfahrt"
bei welchem zum Vorliegen einer Betätigung der Betätigungselemente (3.1-3.n) zwei Größen erfaßt und zwei Signale erzeugt werden; **gekennzeichnet durch** das folgende Merkmal:
bei welchem ein erstes Signal für die Betätigung eines einzelnen, bestimmten Betätigungselementes (3.1-3.n) für Vorwärts- und/oder Rückwärtsfahrt mittels einem, diesem Betätigungselement unmittelbar zugeordneten, ersten Erfassungsmittel (5.1-5.n) zur Erfassung der Funktionsstellung "Betätigung" des Betätigungselementes (3.1-3.n) erzeugt wird und ein zweites Signal "Betätigung eines Betätigungselementes" mittels einem, allen Betätigungselementen (3.1-3.n) gemeinsam zugeordneten zweiten Erfassungsmittel (10) erzeugt wird und
nur bei Vorliegen beider Signale auf eine Betätigung geschlossen wird.

16. Verfahren nach Anspruch 15, **dadurch gekennzeichnet, daß** ein erstes Signal für die Betätigung des Betätigungselementes für "Leerlauf'' erzeugt wird.

17. Verfahren nach Anspruch 15, **dadurch gekennzeichnet, daß** das zweite Signal aus einer mechanischen ODER-Verknüpfung hervorgeht.

18. Verfahren nach Anspruch 16, **dadurch gekennzeichnet, daß** das zweite Signal aus einer elektrischen ODER-Verknüpfung hervorgeht.

19. Verfahren nach einem der Ansprüche 15-18, **dadurch gekennzeichnet, daß** erstes Signal und zweites Signal gleichzeitig vorliegen.

20. Verfahren nach einem der Ansprüche 15-18, **dadurch gekennzeichnet, daß** erstes und zweites Signal zeitversetzt vorliegen.

## Claims

1. Pre-selector (1) for stipulating a driver's wish for one of the following driving states to control automatic transmissions for use in vehicles
- "idling"
- "forward travel"
- "reverse travel"
comprising an actuating element (3.1 to 3.n) associated with each selectable driving state and which can assume at least two operational positions, a first operational position "non-actuation" and a second operational position: "actuation";
comprising a device (4) for detecting the operational positions of the actuating elements (3.1 to 3.n);
**characterised by** the following features:
the device (4) for detecting the operational position for forward and/or reverse travel comprises, in each case, first detection means (5.1 to 5.n) directly associated with the individual actuating elements (3.1 to 3.n) for at least indirectly detecting the "actuation" operational position of the actuating element (3.1 to 3.n);
the device (4) also comprises a second detection means (10) jointly associated with all actuating elements (3.1 to 3.n) for detecting the existence of actuation of one of the actuating elements, comprising means for generating a signal to evaluate the actuating state;
first and second detection means can be coupled to an evaluation device.

2. Pre-selector (1) according to claim 1, **characterised in that** the device for detecting the "idling" operational position also comprises a first detection means directly associated with this actuating element.

3. Pre-selector (1) according to claim 1, **characterised in that** the device (4) is free from a coupling between the first (5.1 to 5.n) and second detection means (10).

4. Pre-selector (1) according to any of claims 1 to 3, **characterised in that** it comprises additional actuating elements (3.4 to 3.6) additionally allowing selection of a certain pre-definable transmission range from a theoretically possible total transmission range for the "forward travel" driving state.

5. Pre-selector (1) according to any of claims 1 to 4, **characterised in that** it is designed as a push button switch device (2), the actuating elements (3.1 to 3.n) being designed in the form of push buttons.

6. Pre-selector (1) according to any of claims 1 to 4, **characterised in that** it is designed as a push button switch device (2), the individual actuating elements (3.1 to 3.n) being designed as switches in the form of flip switches.

7. Pre-selector (1) according to any of claims 1 to 4, **characterised in that** it is designed as a switching device, the actuating elements being designed as sliding switches.

8. Pre-selector (1) according to any of claims 1 to 4, **characterised in that** the actuating elements are designed as levers.

9. Pre-selector (1) according to any of claims 1 to 4, **characterised in that** the actuating elements are designed as key buttons with electronic detection and/or memory devices.

10. Pre-selector (1) according to any of claims 1 to 9, **characterised in that** the first and/or second detection means (5.1 to 5.n), 10) comprise sensors or contacts (7.1 to 7.n, 11) generating an electric variable from a mechanical variable.

11. Pre-selector (1) according to claim 10, **characterised in that** the first and/or second detection means (5.1 to 5.n, 10) comprise sensors or contacts (7.1 to 7.n, 11) in the form of reed contacts.

12. Pre-selector (1) according to claim 10, **characterised in that** the first and/or second detection means (5.1 to 5.n, 10) comprise sensors (7.1 to 7.n, 11) in the form of Hall sensors.

13. Pre-selector according to claim 10, **characterised in that** the first and/or second detection means comprise means for opto-electronic detection.

14. Pre-selector (1) according to any of claims 1 to 13, **characterised in that** the second detection means (10) comprise a mechanical or electrical coupling between each actuating element (3.1 to 3.n) and the sensor or contact (11).

15. Method for reliably detecting actuation of actuating elements (3.1 to 3.n) of a pre-selector (1) for stipulating a driver's wish for one of the following driving states to control automatic transmissions for use in vehicles
- "idling"
- "forward travel"
- "reverse travel"
in which two variables are detected and two signals generated in the event of actuation of the actuating elements (3.1 to 3.n);
**characterised by** the following feature:
in which a first signal is generated for actuation of a single, specific actuating element (3.1 to 3.n) for forward and/or reverse travel by means of a first detection means (5.1 to 5.n) directly associated with this actuating element for detecting the "actuation" operational position of the actuating element (3.1 to 3.n), and a second signal "actuation of an actuating element" is generated by means of a second detection means (10) jointly associated with all actuating elements (3.1 to 3.n) and
only with the existence of the two signals is actuation inferred.

16. Method according to claim 15, **characterised in that** a first signal is generated for actuation of the actuating element for "idling".

17. Method according to claim 15, **characterised in that** the second signal issues from a mechanical OR operation.

18. Method according to claim 16, **characterised in that** the second signal issues from an electric OR operation.

19. Method according to any of claims 15 to 18, **characterised in that** the first and the second signal exist simultaneously.

20. Method according to any of claims 15 to 18, **characterised in that** the first and the second signal exist with a time delay.

## Revendications

1. Dispositif de présélection (1) pour répondre au souhait d'un conducteur de modifier un des états de conduite désignés ci-dessous dans l'adressage d'une boîte de vitesses automatique pour une utilisation dans des véhicules :
- « point mort »
- « marche avant »
- « marche arrière »
le dispositif (4) d'acquisition de la position de fonctionnement pour la marche avant et/ou la marche arrière comprend respectivement des premiers moyens d'acquisition (5.1-5.n), directement associés aux éléments de commande individuels (3.1-3.n), pour une acquisition de la position de fonctionnement « commande» de l'élément de commande (3.1-3.n) ;
le dispositif (4) comprend, de plus, un second moyen d'acquisition (10), associé en commun à tous les éléments de commande (3.1-3.n), pour une acquisition de la présence de la « commande » d'un des éléments de commande, comprenant des moyens pour générer un signal d'évaluation de l'état de commande ; les premiers et seconds moyens d'acquisition étant accouplés à un dispositif d'évaluation.

2. Dispositif de présélection (1) selon la revendication 1, **caractérisé en ce que** le dispositif d'acquisition de la position de fonctionnement pour le « point mort » comprend également un premier moyen d'acquisition directement associé à cet élément de commande.

3. Dispositif de présélection (1) selon la revendication 1, **caractérisé en ce que** le dispositif (4) n'a pas de couplage entre les premiers (5.1-5.n) et seconds (5.n) moyens d'acquisition (10).

4. Dispositif de présélection (1) selon l'une quelconque des revendications 1 à 3, **caractérisé en ce qu'**il présente des éléments de commande complémentaires (3.4-3.6) qui permettent en outre, pour l'état de conduite « marche avant », de choisir une certaine gamme de rapports de vitesses prédéfinissable à partir d'un ensemble théorique de gammes de rapports de vitesses possibles.

5. Dispositif de présélection (1) selon l'une quelconque des revendications 1 à 4, **caractérisé en ce qu'**il est configuré comme un système de commutation à touches (2), les éléments de commande (3.1-3.n) étant configurés sous forme de touches.

6. Dispositif de présélection (1) selon l'une quelconque des revendications 1 à 4, **caractérisé en ce qu'**il est configuré comme un système de commutation à touches (2), les éléments de commande individuels (3.1-3.n) en tant que commutateurs étant configurés sous forme d'interrupteurs à bascule.

7. Dispositif de présélection (1) selon l'une quelconque des revendications 1 à 4, **caractérisé en ce qu'**il est configuré comme un système de commutation (2), les éléments de commande (3.1-3.n) étant configurés comme des interrupteurs à coulisse.

8. Dispositif de présélection (1) selon l'une quelconque des revendications 1 à 4, **caractérisé en ce que** les éléments de commande sont configurés comme un levier.

9. Dispositif de présélection (1) selon l'une quelconque des revendications 1 à 4, **caractérisé en ce que** les éléments de commande sont configurés comme des touches avec des dispositifs électroniques d'acquisition et/ou de mise en mémoire.

10. Dispositif de présélection (1) selon l'une quelconque des revendications 1 à 9, **caractérisé en ce que** les premiers et/ou seconds moyens d'acquisition (5.1-5.n, 10) comprennent des capteurs ou contacts (7.1-7.n, 11) qui générèrent une grandeur électrique à partir d'une grandeur mécanique.

11. Dispositif de présélection (1) selon la revendication 10, **caractérisé en ce que** les premiers et/ou seconds moyens d'acquisition (5.1-5.n, 10) comprennent des capteurs ou contacts (7.1-7.n, 11) sous forme de contacts relais Reed.

12. Dispositif de présélection (1) selon la revendication 10, **caractérisé en ce que** les premiers et/ou seconds moyens d'acquisition (5.1-5.n, 10) présentent des capteurs (7.1-7.n, 11) sous forme de capteurs Hall.

13. Dispositif de présélection (1) selon la revendication 10, **caractérisé en ce que** les premiers et/ou seconds moyens d'acquisition comprennent des moyens d'acquisition optoélectronique.

14. Dispositif de présélection (1) selon l'une quelconque des revendications 1 à 13, **caractérisé en ce que** les seconds moyens d'acquisition (10) comprennent un couplage mécanique ou électrique entre chaque élément de commande (3.1-3.n) et le capteur ou contact (11).

15. Procédé d'acquisition sûre de la commande des éléments de commande (3.1-3.n) d'un dispositif de présélection (1) pour répondre au souhait d'un conducteur de modifier un des états de conduite désignés ci-dessous dans l'adressage d'une boîte de vitesses automatique pour une utilisation dans des véhicules :
- « point mort »
- « marche avant »
- « marche arrière »
dans lequel, pour obtenir une commande des éléments de commande (3.1-3.n), deux grandeurs sont acquises et deux signaux sont générés ;
**caractérisé par** les caractéristiques suivantes :
un premier signal est généré pour la commande d'un premier élément de commande individuel (3.1-3.n) défini pour la marche avant et/ou la marche arrière au moyen d'un premier moyen d'acquisition (5.1-5.n), directement associé à cet élément de commande, pour une acquisition de la position de fonctionnement « commande » de l'élément de commande (3.1-3.n) et un second signal « commande d'un élément de commande » est généré au moyen d'un second moyen d'acquisition (10) associé en commun à tous les éléments de commande (3.1-3.n) ; et
c'est uniquement en présence des deux signaux qu'une commande est terminée.

16. Procédé selon la revendication 15, **caractérisé en ce qu'**un premier signal pour la commande de l'élément de commande est généré pour le « point mort ».

17. Procédé selon la revendication 15, **caractérisé en ce que** le second signal résulte d'une somme logique (opérateur « OU ») mécanique.

18. Procédé selon la revendication 16, **caractérisé en ce que** le second signal résulte d'une somme logique (opérateur « OU ») électrique.

19. Procédé selon l'une quelconque des revendications 15 à 18, **caractérisé en ce que** le premier signal et le second signal sont générés en même temps.

20. Procédé selon l'une quelconque des revendications 15 à 18, **caractérisé en ce que** le premier et le second signal ne sont pas générés en même temps.
